# EUROPÄISCHE PATENTANMELDUNG

(11) **EP 0 874 447 A2**
(43) Veröffentlichungstag der Anmeldung: **28.10.1998**
(21) Anmeldenummer: 98810273.7
(22) Anmeldetag: 30.03.1998
(51) Int. Cl.: H02M 7/00

(54) **Niederinduktiver Stromrichter**

(30) Priorität: 23.04.1997 DE 19717087
(71) Anmelder: Asea Brown Boveri AG, 5401 Baden (CH)
(72) Erfinder: Grüning, Horst, Dr., 5430 Wettingen (CH)
(74) Vertreter: Weibel, Beat

(57) **Zusammenfassung**

Es wird ein Stromrichter angegeben der dadurch gekennzeichnet ist, dass zwischen den Strängen eines Phasenmoduls des Stromrichters ein Verschienungssystem vorgesehen ist, das die Bildung von Potentialkammern um die Halbleiterschalter bzw. die Beschaltungselemente erlaubt. Die Potentialkammern umgeben die Halbleiterschalter und die Beschaltungselemente. Sie umfassen zwei voneinander isoliert angeordnete, insbesondere sich überlappende Längsbleche. Ausserdem können Querbleche vorgesehen sein, die mit den Anschlüssen der Halbleiterschalter bzw. der Beschaltungselemente verbunden sind. Durch die Potentialkammern erreicht man, dass jede Potentialkammer nur noch einen Potentialunterschied von Bruchteilen der Zwischenkreisspannung aufweist. Das Verschienungssystem übernimmt die Isolation des hohen, der Zwischenkreisspannung entsprechenden Potentialunterschiedes.

## Beschreibung

### Technisches Gebiet

Die Erfindung bezieht sich auf das Gebiet der Leistungselektronik. Sie geht aus von einem Stromrichter gemäss dem Oberbegriff des ersten Anspruchs.

### Stand der Technik

Ein solcher Stromrichter wird z.B. in der Europäischen Patentanmeldung 0 660 496 A2 beschrieben. Der dort beschriebene Stromrichter umfasst im wesentlichen zwei Stapel, wobei der eine Stapel mit Halbleiterschaltern bestückt ist und der anderer mit Beschaltungselementen, insbesondere Dioden. Durch geschickte Anordnung der beiden Stapel wird versucht, den Stromrichter möglichst niederinduktiv zu gestalten. Zu diesem Zweck werden die beiden Stapel auch so nahe wie möglich nebeneinander angeordnet. Dies ist jedoch nur bis zu einen gewissen Grad möglich, da bei hohen Zwischenkreisspannung der Abstand der Stapel aus Sicherheitsgründen (Überschläge) vergrössert werden muss. Dies zieht aber wieder eine unerwünschte Vergrösserung der eingeschlossenen Stromkreisfläche mit sich, so dass die Induktivität wieder ansteigt.

### Darstellung der Erfindung

Aufgabe der Erfindung ist es, einen Stromrichter anzugeben, der auch bei hohen Zwischenkreisspannungen niederinduktiv aufgebaut ist und damit mit hohen Taktfrequenzen angesteuert werden kann. Diese Aufgabe wird durch die Merkmale des unabhängigen Anspruchs gelöst.

Kern der Erfindung ist es also, dass zwischen den Strängen eines Phasenmoduls eines Stromrichters ein Verschienungssystem vorgesehen ist, das die Bildung von Potentialkammern um die Halbleiterschalter bzw. die Beschaltungselemente erlaubt. Die Potentialkammern umgeben die Halbleiterschalter und die Beschaltungselemente. Sie umfassen zwei voneinander isoliert angeordnete, insbesondere sich überlappende Längsbleche. Die Längsbleche sind mit den Anschlüssen der zugeordneten Elemente elektrisch und oder mechanisch verbunden. Diese Verbindung kann durch blosses Verbinden der Längsbleche mit den Elementen, über Anschlussdrähte oder mittels geeigneten Querblechen erfolgen. Durch die Potentialkammern erreicht man, dass jede Potentialkammer nur noch einen Potentialunterschied von Bruchteilen der Zwischenkreisspannung aufweist. Das Verschienungssystem übernimmt die Isolation des hohen, der Zwischenkreisspannung entsprechenden Potentialunterschiedes. Dies ermöglicht in einem bevorzugten Ausführungsbeispiel die Verwendung einer das Verschienungssystem ausfüllenden Isoliermasse. Da die Isoliermasse besser isoliert als Luft, können die Teile des Stromrichters noch näher zusammengerückt werden, so dass die eingeschlossene Stromkreisfläche und damit auch die Induktivität minimiert wird. Eine weitere Verbesserung erhält man dadurch, dass eine Mittelpotentialschiene in das Verschienungssystem eingeführt ist. Die Mittelpotentialschiene dient insbesondere der mechanischen Stabilisierung des Verschienungssytems. Indem diese Schiene mit einem ungefähr der halben Zwischenkreisspannung entsprechenden Potential beaufschlagt wird, erreicht man ausserdem eine Halbierung der geforderten Isolationsspannung zwischen den Potentialkammern. Somit kann die Anordnung noch näher zusammengerückt werden.

Weitere vorteilhafte Ausführungsformen ergeben sich aus den entsprechenden abhängigen Ansprüchen.

### Kurze Beschreibung der Zeichnungen

Nachfolgend wird die Erfindung anhand von Ausführungsbeispielen im Zusammenhang mit den Zeichnungen näher erläutert.

Es zeigen:
- **Fig. 1**: Ein erstes Ausführungsbeispiel der Erfindung
- **Fig. 2**: Ein zweites Ausführungsbeispiel der Erfindung
- **Fig. 3**: Einen Ausschnitt der Potentialkammern im Schnitt

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

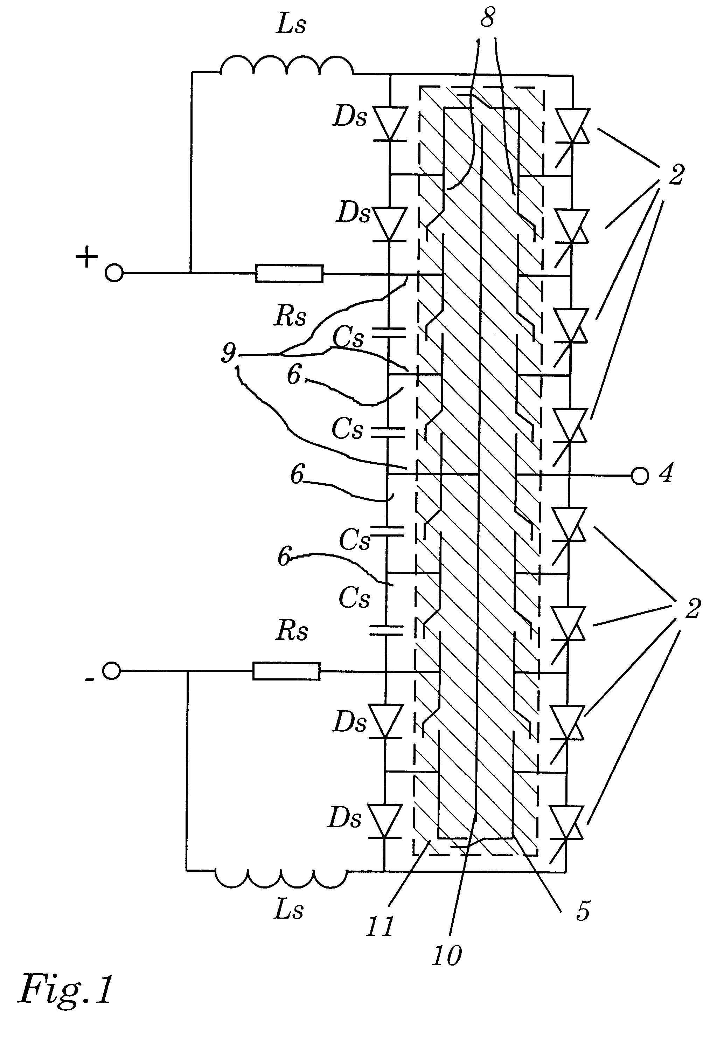

Figur 1 zeigt einen Phasenbaustein 1 eines Stromrichters nach der Erfindung. Der Phasenbaustein 1 umfasst zwei Zweige mit in Serie geschalteten Leistungshalbleiterschaltern 2. Eine Mittelanzapfung der beiden Zweige bildet einen Phasen- oder Lastanschluss 4, an den eine Last angeschlossen werden kann, so dass z.B. eine Netzkupplung oder eine ASVC Vorrichtung (ASVC = Advanced Static Var Compensation) gebildet wird. Parallel zu den Leistungshalbleiterschaltern 2 sind Freilauf- und/oder Beschaltungselemente Rs, Cs, Ls, Ds angeordnet. Diese dienen insbesondere dem Schutz der Leistungshalbleiterschalter 2. Antiparallel zu den Leistungshalbleiterschaltern können Freilauf- oder Rückstromdioden vorgesehen sein oder diese können wie dargestellt in die Leistungshalbleiterschalter integriert sein. Bei den Leistungshalbleiterschaltern kann es sich um GTOs, hart angesteuerte GTOs, IGBTs oder andere geeignete, schnell abschaltbare Leistungshalbleiterbauelemente handeln. Je nach Wahl der Art des Leistungshalbleiterbauelements sind dann auch unterschiedliche Beschaltungselemente notwendig. Ein solcher Phasenbaustein 1 kann an einen Zwischenkreis 7 mit einem Plus- und einem Minusanschluss angeschlossen werden. Die Funktion des Phasenbausteins bzw. des aus mindestens einem Phasenbaustein gebildeten Stromrichter wird als bekannt vorausgesetzt und an dieser Stelle nicht weiter erläutert.

Nach Figur 1 werden nun die Leistungshalbleiterschalter 2 und die übrigen Elemente Cs, Rs in zwei Strängen 3 angeordnet. Um die Induktivität der Anordnung zu minimieren, wäre es wünschenswert, die zwischen den Strängen eingeschlossene Stromkreisfläche zu minimieren. Dies könnte dadurch erreicht werden, dass die Bauelemente möglichst nahe beieinander angeordnet werden. Bei Hochspannungsanwendungen sind diesem Ansinnen jedoch durch den Luftisolationsabstand Grenzen gesetzt.

Die Erfindung geht nun diesbezüglich einen anderen Weg. Wie in Figur 1 gezeigt werden die Bauelemente mit Potentialkammern 6 umgeben. Die Potentialkammern 6 gehören zu einem Verschienungssystem 5, das zwischen den beiden Strängen 3 angeordnet ist. Die Potentialkammern 6 werden im wesentlichen durch zwei elektrisch leitende, sich aber nicht berührende, vorzugsweise überlappende Längsbleche 8 gebildet. Die Längsbleche können mit den Anschlüssen der Elemente, die sie umgeben, elektrisch und/oder mechanisch verbunden sein. Diese Verbindung kann beispielsweise mittels Anschlussdrähten, durch einfaches Verbinden oder auch durch zwei geeignet geformte Querbleche 9 erfolgen. Im Fall von Querblechen ist für benachbarte Bauelement der Serieschaltung jeweils nur eine Querblech vorgesehen. Die Querbleche 9 sind ausserdem jeweils mit den Anschlüssen der in der durch Längs- und Querbleche gebildeten Potentialkammer angeordneten Elemente elektrisch verbunden (z.B. durch Löten oder Schweissen. Schrauben, Druckkontakt o.ä.). Innerhalb einer Potentialkammer 6, d.h. um ein Bauelement herum, entsteht somit lediglich ein Potentialunterschied von Bruchteilen der Zwischenkreisspannung. Das Verschienungssystem 5 übernimmt die Isolation der hohen Potentialunterschiede. Dadurch können die Stränge 3 nahe zueinander gerückt werden, so dass die eingeschlossene Stromkreisfläche und damit die Induktivität minimiert wird.

Im Ausführungsbeispiel nach Figur 1 sind für ein Phasenbaustein 1 zwei Stränge 3 vorgesehen. Die Beschaltungselemente Ds und Cs sind einem Strang zugeordnet und die rückwärtsleitenden Leistungshalbleiterschalter 2 einem zweiten. Anstelle von rückwärtsleitenden Leistungshalbleiterschaltern könnten auch rückwärtssperrende Leistungshalbleiterschalter mit antiparallel geschalteter Freilauf- oder Rückstromdiode verwendet werden. Je vier in Serie geschaltete Leistungshalbleiterschalter 2 bilden einen Zweig. In der Mittel der beiden Zweige ist ein Phasen- oder Lastanschluss 4 gebildet durch eine Mittelanzapfung vorgesehen. Zur Vervollständigung des Phasenbausteins 1 können noch Beschaltungswiderstände Rs und Stromanstiegsbegrenzungsdrosseln Ls vorgesehen sein. Die Anzahl und Art der Beschaltungselemente ist je nach Art der Leistungshalbleiterschalter wähl- und bestimmbar.

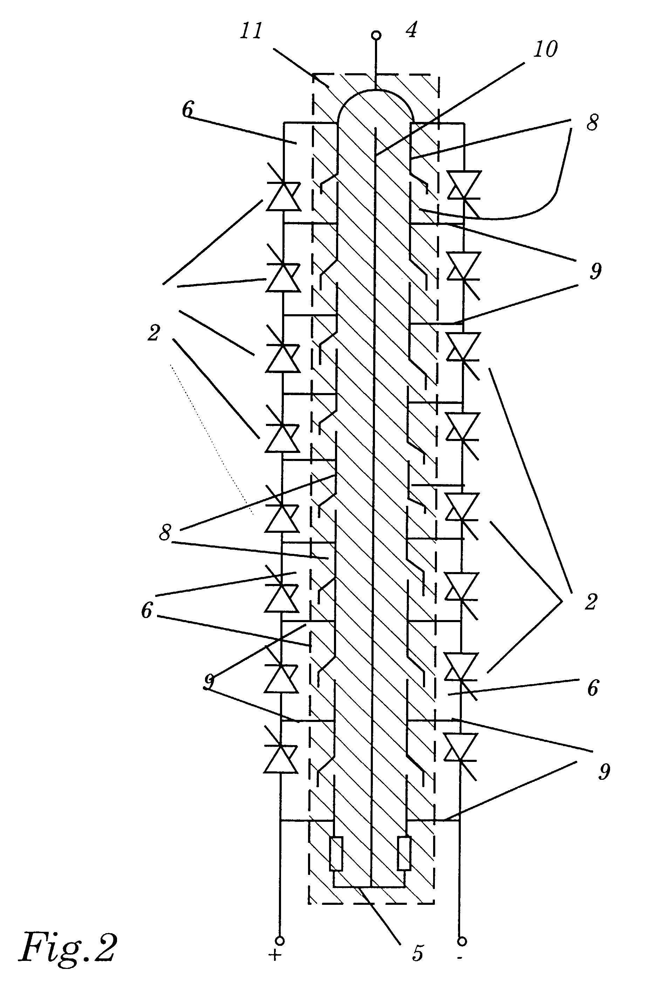

Figur 2 zeigt eine andere Ausführungsform der Erfindung. Hier bildet je ein Zweig des Phasenmoduls 1 einen Strang 3. Plus-/Minusanschluss und der Phasenanschluss 4 sind also an einander gegenüberliegenden Enden der Stränge 3 angeordnet. Nicht dargestellt sind im Beispiel nach Figur 2 die Beschaltungselemente. Diese können in einem separaten Strang z.B. gegenüber dem Plus- und Minusanschluss oder unter- oder oberhalb der dargestellten Schalterstränge 3 angeordnet sein. Wesentlich für das Ausführungsbeispiel nach Figur 2 ist jedoch, dass die Elemente ebenfalls von Potentialkammern 6 umgeben sind. Die Potentialkammern 6 sind gleich aufgebaut wie diejenigen nach dem Beispiel nach Figur 1.

Bei beiden Ausführungsbeispielen erreicht man weiter verbesserte Eigenschaften, wenn das Verschienungssystem 5 mit einer Isoliermasse vergossen ist. Als Isoliermasse kommen alle geeigneten Werkstoffe in Frage wie z.B. Mikadur oder ähnliche Stoffe. Die Verwendung einer Isoliermasse erlaubt, die Stränge 3 und das Verschienungssystem 5 noch näher zu beabstanden, so dass die eingeschlossene Stromkreisfläche noch kleiner wird.

Die mechanische Stabilität des Verschienungssystems 5 kann durch Einfügen einer Mittelschiene 10 verbessert werden. Wird die Mittelschiene 10 ausserdem mit einem mittleren Potential des Zwischenkreises verbunden, so erreicht man eine Halbierung der geforderten Isolationsspannungen. In Figur 1 wird die Mittelpotentialschiene 10 mit einem Mittelanschluss des Stranges des Beschaltungselemente verbunden. Im Ausführungsbeispiel nach Figur 2 wird das Mittelpotential durch einen hochohmigen Spannungsteiler (R, R) gebildet, der an den Plus- und Minusanschluss angeschlossen ist. Die Halbierung der Isolationsspannungen erlaubt es, das Verschienungssystem 5 und damit auch die Stränge 3 noch näher zusammenzurücken. Die Mittelpotentialschiene könnte aber auch mit dem Phasenanschluss verbunden sein.

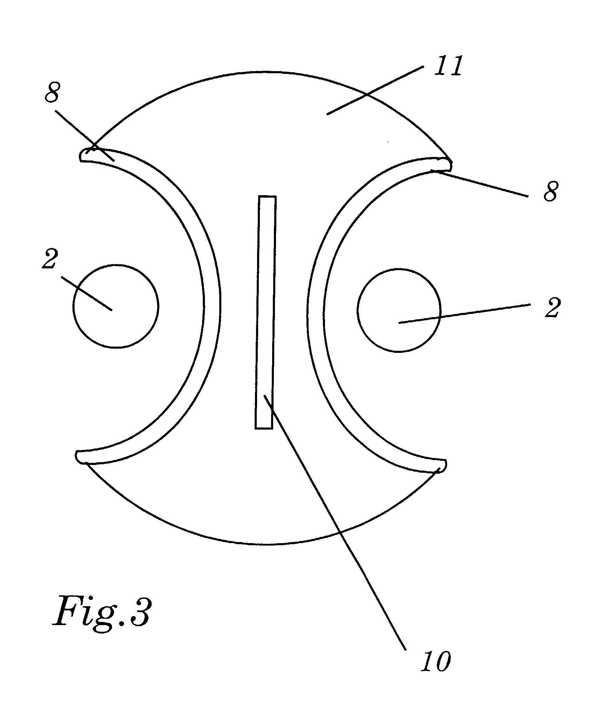

Die Längsbleche 8 werden, wie in Figur 3 dargestellt wird, mit Vorteil domförmig ausgebildet. Dadurch umgeben sie die zugeordneten Bauelemente 2 in einem hohen Masse. Anstelle von domförmigen Längsblechen 8 wären auch nahezu oder vollständig abgeschlossene Potentialkammern denkbar. Die Verwendung von domförmigen Längsblechen 8 ist aber im Hinblick auf einen geringen Montageaufwand vorteilhaft.

Insgesamt erlaubt die Erfindung, die Induktivität eines Phasenmoduls insbesondere für Hochspannungsanwendungen weiter zu minimieren. Dies macht den Weg frei für die Verwendung von höheren Ansteuerfrequenzen.

### Bezugszeichenliste

- 1: Phasenbaustein
- 2: Halbleiterschalter
- 3: Strang
- 4: Phasenanschluss
- 5: Verschienungssystem
- 6: Potentialkammer
- 7: Zwischenkreis
- 8: Längsblech
- 9: Querblech
- 10: Mittelpotentialschiene
- 11: Isoliermasse
- Cs, Rs, Ls, Ds: Beschaltungselemente
- R: Widerstände

## Patentansprüche

1. Stromrichter mit mindestens einem Phasenbaustein (1), der an einen Zwischenkreis (7) angeschlossen ist und zwei Zweige umfasst, die mit Halbleiterschaltern (2) und Freilauf- und Beschaltungselementen (Cs, Ls, Rs, Ds) bestückt sind, wobei die Halbleiterschalter (2) und die Freilauf- und Beschaltungselemente (Cs, Ls, Ds, Rs) in mindestens zwei entlang einer Strangrichtung verlaufenden Strängen (3) angeordnet sind und ein Phasenanschluss (4) durch eine Mittelanzapfung zwischen den beiden Zweigen gebildet wird;
dadurch gekennzeichnet, dass zwischen dem ersten und zweiten Strang (3) ein Verschienungssystem (5) vorgesehen ist, das Potentialkammern (6) um die Halbleiterschalter und/oder die Freilauf- und/oder die Beschaltungselemente bildet.

2. Stromrichter nach Anspruch 1, dadurch gekennzeichnet, dass eine Potentialkammer (6) zwei sich nicht berührende, insbesondere überlappende, elektrisch leitende Längsbleche (8), die entlang der Strangrichtung verlaufen, umfasst.

3. Stromrichter nach Anspruch 2, dadurch gekennzeichnet, dass die Längsbleche (8) mit den Anschlüssen der zugeordneten Halbleiterschalter (2), der Freilauf- und/oder Beschaltungselemente elektrisch und/oder mechanisch verbunden sind.

4. Stromrichtern nach Anspruch 3, dadurch gekennzeichnet, dass für die elektrische und/oder mechanische Verbindung der Längsbleche mit den zugeordneten Halbleiterschalter (2), der Freilauf- und/oder Beschaltungselemente zwei elektrisch leitende Querbleche (9), die im wesentlichen senkrecht zur Strangrichtung angeordnet sind, vorgesehen sind.

5. Stromrichter nach einem der Ansprüche 2 bis 4, dadurch gekennzeichnet, dass das Verschienungssystem eine Mittelpotentialschiene (10) umfasst, die zwischen den Potentialkammern (6) des ersten und zweiten Stranges (3) angeordnet ist und mit einem mittleren Potential des Zwischenkreises (7) verbunden ist.

6. Stromrichter nach einem der Ansprüche 1 bis 5, dadurch gekennzeichnet, dass das die Potentialkammern (6) bildende Verschienungssystem (5) mit einer Isoliermasse (11) gefüllt ist.

7. Stromrichter nach einem der Ansprüche 1 bis 6, dadurch gekennzeichnet, dass die Halbleiterschalter (2) und die Beschaltungselemente (Cs, Ds) in separaten Strängen angeordnet sind.

8. Stromrichter nach Anspruch 7, dadurch gekennzeichnet, dass die Halbleiterschalter (2) in einem ersten und einem zweiten parallel angeordneten Strang (3) angeordnet sind; wobei der Plus- bzw. Minusanschluss an dem einen Ende der Stränge und der Phasenanschluss (4) an dem gegenüberliegenden Ende der Stränge angeordnet ist.

9. Stromrichter nach Anspruch 7, dadurch gekennzeichnet, dass der Strang der Beschaltungselemente (Cs, Ds) gegenüber dem Strang der Halbleiterschalter (2) angeordnet ist, der Plusanschluss auf der einen Seite der Stränge, der Minusanschluss auf der gegenüberliegenden Seite der Stränge und der Phasenanschluss (4) in der Mitte des Halbleiterschalterstranges angeordnet ist.

10. Stromrichter nach einem der vorstehenden Ansprüche, dadurch gekennzeichnet, dass die Längsbleche eine die Halbleiterschalter, Freilauf- und Beschaltungselemente domförmig umgebende Form aufweisen.
